(19) Europäisches Patentamt
European Patent Office
Office européen des brevets

(11) EP 4 227 323 A1

(12) EUROPEAN PATENT APPLICATION

(43) Date of publication:
**16.08.2023 Bulletin 2023/33**

(21) Application number: **22305166.5**

(22) Date of filing: **15.02.2022**

(51) International Patent Classification (IPC):
***C08B 11/193*** *(2006.01)* ***C08B 11/20*** *(2006.01)*
***C08B 15/08*** *(2006.01)* ***C08L 1/26*** *(2006.01)*

(52) Cooperative Patent Classification (CPC):
**C08B 11/193; C08B 11/20; C08B 15/08; C08L 1/26**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Institut national de recherche pour l’agriculture, l’alimentation et l’environnement**
**75007 Paris (FR)**

(72) Inventors:
- **VILLARES, Ana**
  **44300 Nantes (FR)**
- **CATHALA, Bernard**
  **44240 La Chapelle sur Erdre (FR)**
- **MOREAU, Céline**
  **44300 Nantes (FR)**

(74) Representative: **Ipside**
**6, Impasse Michel Labrousse**
**31100 Toulouse (FR)**

# (54) A METHOD OF PREPARING MULTI-FUNCTIONALIZED CELLULOSE AND USE THEREOF FOR PREPARING MULTI-FUNCTIONNALIZED NANOFIBRILLATED CELLULOSE

(57) The invention relates to a method of preparing multi-functionalized cellulose, comprising subjecting cellulose fibers concomitantly, in one-pot in an alkaline reaction medium, to a first functionalization step for grafting a first organic functional group on the cellulose and a second functionalization step for grafting a second organic functional group on the cellulose. The multi-functionalized cellulose fibers thus obtained, and containing at least a carboxyl function, are particularly suitable for being subjected to a nanofibrillation step to prepare multi-functionalized nanofibrillated cellulose.

EP 4 227 323 A1

## Description

The invention falls within the general field of valorization of renewable resources, in particular cellulose.

More particularly, the invention relates to a method of preparing multi-functionalized cellulose. The invention also relates to a more global method of preparing multi-functionalized nanofibrillated cellulose, as well as to multi-functionalized nanofibrillated cellulose obtainable by such a method, and the use thereof in composite materials.

Valorization of cellulose, the most abundant renewable resource on Earth, is considered as one of the most effective ways towards sustainability. Due to its high abondance, low cost and biodegradability, cellulose is indeed a high-value candidate for the preparation of bio-based materials, in replacement of fossil resources.

Many methods have been proposed by the prior art for modifying cellulose in order to adapt its surface properties to the applications for which it is intended to be used. Most of these methods achieve the grafting of a single functional group, for example a hydrophobic group, on the cellulose surface. As many applications require cellulose to have multiple functions, a few methods have also been proposed for grafting two different functional groups thereon. One of these methods, comprising providing cellulose fibers with a carboxymethyl function and an aldehyde function, is for example described in the publication of Sichinga et al., 2022, Cellulose, 29(2): 1-17. However, all the methods developed up to now for preparing multi-functionalized cellulose are costly and time-consuming. There remains a need for a method for preparing multi-functionalized cellulose within short reaction times, at low cost and with a high yield. This need is all the more important that multi-functionalized cellulose fibers can be used for preparing multi-functionalized nanofibrillated cellulose, which find applications in many fields.

Nanofibrillated cellulose, also called cellulose nanofibers or cellulose nanofibrils (CNF), consisting of nanosized cellulose fibers with a width in the nanometric range, typically of between 5 and 15 nm, and a length in the micrometric range, has attracted much interest scientifically and commercially because of its high abundancy, renewability and recyclability, as well as its attractive properties such as high aspect ratio, high strength and stiffness, low density, transparency, high surface area and low thermal expansion. These outstanding properties have triggered the fabrication and use of nanofibrillated cellulose for a wide range of applications including packaging, paper and board, composite materials, adhesives, absorbents, electronics, medical, pharmaceutical and cosmetic products.

Despite its outstanding properties, nanofibrillated cellulose remains underemployed because of several constraints associated to its manufacture. Generally, nanofibrillated cellulose is prepared by disintegration, into fine fragments, of cellulose fibers, typically in the initial form of delignified wood pulp. However, the mechanical treatment methods implemented for this purpose, generally homogenization or high-pressure micro-fluidization, involve high-energy consumption in order to break the fibers to a nanometric scale and tend to damage the nanofiber structure by reducing its molar mass and crystallinity. In order to facilitate the nanofibrillation process and limit the energy requirement thereof, two main types of strategies of pretreating cellulose fibers have been developed by the prior art: an enzymatic strategy and a chemical strategy. Enzymatic cellulose pretreatment involves the use of endoglucanases or cellulases solutions, the hydrolyzing effect of which disrupts the cellulose structure, thereby promoting the subsequent mechanical treatment steps. However, the energy required for shearing the fibers is still high and multiple passes through the homogenizer or high-pressure micro-fluidizer are required. Furthermore, the quality of the nanofibers obtained, in particular their dispersion capacity, is often poor.

Chemical pretreatment of the cellulose fibers aims to introduce ionic groups on the surface of the fibers, for creating electrostatic repulsion phenomena and thereby improving the colloidal stability of the nanofibrils dispersion. Mechanical shearing is then highly facilitated. Two main methods have been proposed for this purpose: oxidation catalyzed by the radical 2,2,6,6-tetramethylpiperidine-1-oxyl (TEMPO) and carboxyalkylation, in particular carboxymethylation.

The TEMPO-catalyzed oxidation was proposed as one of the most promising methods for the production of cellulose nanofibers. Indeed, TEMPO transforms the primary hydroxyl at C6 in the cellulose chain into a carboxylate group, thereby creating electrostatic repulsions and facilitating the separation of cellulose nanofibers during the subsequent mechanical treatment. The use of the TEMPO oxidation reduces the energy cost of the process. However, it results in high quantities of toxic wastes, which are difficult to handle on an industrial scale, and significant decreases in degree of polymerization (DP) occur on the cellulose chains during oxidation. In addition, the presence of toxic residual reactive species in the reaction product obtained limits the use of the latter and adversely affects the properties of the CNF over time.

Traditionally developed for the complete solubilization of the cellulose fibers, controlled carboxymethylation can be viewed as a strategy to facilitate nanofibrillation. For this purpose, cellulose fibers are first impregnated with monochloroacetic acid (MCA), and then their hydroxyl groups are activated by concentrated sodium hydroxide (NaOH) solutions to perform Williamson etherification of hydroxyl groups of the cellulose chain. The degree of substitution (DS), which is the average number of functional groups, more particularly carboxymethyl groups, introduced in the cellulose polymer, can be controlled by experimental conditions such as MCA and NaOH ratios, temperature and reaction time. The carboxyl groups thus introduced in the cellulose chain facilitate fibers disruption and obtention of CNF, in particular

as the formation of irreversible hydrogen bonds within the cellulose polymer is reduced by the replacement of hydroxyl groups with carboxymethyl groups.

A barrier to the industrial use of CNF is the difficulty to adapt their surface properties to specific applications. Carboxymethylated CNF is generally marketed without any further modification, which limits its use for applications where a high compatibility and/or interaction with some other components, such as organic components, is required, for example as reinforcing material in hydrophobic polymer matrices in the field of composite materials. Many industrial applications of nanofibrillated cellulose, e.g., in the field of composite materials, in the packaging industry, in separation technologies such as filtration and purification, as hydrogels or aerogels, etc., require indeed the introduction on the cellulose surface of additional functionalities, such as additional functions, additional properties, additional reactivity, etc. For most of such applications, it is currently proposed to functionalize the nanofibrillated cellulose by chemical post-treatment after the nanofibrillation has taken place, generally resulting in increased production costs and environmental impact.

It has been proposed by the prior art, illustrated by the publication of Kaldéus et al., Cellulose, 2018, 25: 7031-7042, to prepare bi-functional cellulose nanofibrils by a process comprising, before a nanofibrillation step, the one-pot preparation of bi-functional cellulose fibers bearing a carboxymethyl function and an additional function, more particularly an allyl function or a propargyl function. To this end, cellulose fibers are first subjected to a carboxymethylation step, then to an etherification reaction by contacting them with allyl bromide or propargyl bromide in an alkaline medium. However, this method requires high amounts of reactants, a long reaction time and it does not enable to graft on the cellulose surface more than 0.3 - 0.5 mmol of carboxymethyl groups per gram of cellulose. The present invention aims to propose a method for preparing multi-functionalized cellulose, as well as, from the latter, multi-functionalized nanofibrillated cellulose, within short reaction times, at low cost and preferably with a high yield.

The inventors have now discovered that such objectives can be achieved by a specific method, which enables grafting two or even more functionalities onto the cellulose polymer by one-pot simultaneous functionalization reactions. One of these functionalities may be a carboxyl-containing function, facilitating a subsequent nanofibrillation step when needed. In the context of a more global method of preparing multi-functionalized nanofibrillated cellulose, the inventors have in particular applied this specific method for multi-functionalizing cellulose fibers simultaneously by a carboxyl-containing group, more particularly a carboxymethyl group, and by one or several additional functional group(s), before submitting them to a nanofibrillation treatment. They have discovered that, unexpectedly and contrarily to the teaching of the above-mentioned publication of Kaldéus et al., multi-functional cellulose fibers can be obtained by carrying out this specific method for realizing simultaneously a carboxymethylation and an additional functionalization of the cellulose fibers, and that this simultaneous additional functionalization then does not hinder the carboxymethylation, so that there is no significant decrease in the total carboxymethyl charge grafted on the cellulose fibers, compared to cellulose fibers which have undergone only carboxymethylation. This simultaneous additional functionalization of the cellulose fibers does not interfere with the subsequent nanofibrillation step of an overall method of producing multi-functionalized CNF from cellulose fibers. This nanofibrillation step is still facilitated compared to the nanofibrillation of non-carboxymethylated cellulose fibers.

Thus, according to a first aspect, the invention relates to a method of preparing multi-functionalized cellulose, comprising subjecting cellulose fibers, preferably unmodified, i.e., non-functionalized, cellulose fibers, to:

- a first functionalization step for grafting a first organic functional group on the cellulose polymer, by reacting the cellulose with a first reactant, of the organic type, comprising a halogen atom and said first functional group, and devoid of hydroxyl function,
- and a second functionalization step for grafting on the cellulose polymer a second organic functional group, different from the first functional group, by reacting the cellulose with a second reactant, of the organic type, different from the first reactant, comprising a halogen atom and said second functional group, and devoid of hydroxyl function.

According to the invention, the first functionalization step and the second functionalization step are carried out concomitantly, in one-pot, in an alkaline reaction medium.

The method of the invention yields multi-functionalized cellulose fibers much more quickly than the methods of the prior art, in a single step carried out under suitable conditions for covalently grafting the first functional group and the second functional group to the cellulose polymer.

The method of the invention makes it possible to functionalize cellulose fibers simultaneously with all combinations of functional groups, even simultaneously with a carboxyl function and a primary and/or secondary amine function. However, in that latter case the degree of substitution of the cellulose polymer is quite low.

Therefore, in particular embodiments of the invention, the first reactant and the second reactant do not simultaneously comprise a carboxyl function and a primary or secondary amine function. It is thereby meant that, if the first reactant comprises a carboxyl function, then neither the first reactant nor the second reactant comprises a primary or secondary amine function, and if the second reactant comprises a carboxyl function, then neither the first reactant nor

the second reactant comprises a primary or secondary amine function. Similarly, if the first reactant comprises a primary or secondary amine function, then neither the first reactant nor the second reactant comprises a carboxyl function, and if the second reactant comprises a primary or secondary amine function, then neither the first reactant nor the second reactant comprises a carboxyl function. More generally, in particular embodiments of the method of the invention, the first reactant and the second reactant do not comprise simultaneously two or more functions that are likely to react with one another under the operating conditions, so as not to compete with the reactions of those reactants with cellulose.

The term carboxyl as used in this description encompasses both the acid form and the carboxylate ion form.

By functional group, it is herein meant a group having at least one function, of any kind, conferring it a specific characteristic / property / capacity. The term "functional group" as used in this description encompasses a functional group by itself, but also a larger organic chemical moiety containing at least one functional group.

The functional groups grafted onto the cellulose polymer according to the invention can be any group a function of which may be of interest for a given application of the multi-functionalized cellulose. These functional groups are preferably chosen so as to broaden the fields of application of cellulose to applications requiring specific mechanical properties and/or functionalities, for example requiring tuning the surface properties of cellulose, such as polarity and/or charge. The functional groups may for example contain a polymerization initiating function, such as of the benzophenone type or of the $\alpha$-bromoisobutyryl type, for forming, on the fibers surface, polymer chains such as acrylates, styrenes, etc., a chromophore, a hydrophobic group, a group bearing a positive or a negative charge, an alkene or an alkyne group for performing click chemistry such as by azide-alkyne cycloaddition, etc. By way of examples, the functional groups can be selected in the group comprising a carbonyl or carboxylate/carboxyl function, an alkyl, allyl or alkyne chain, an aromatic ring, a specific functionality such as benzophenone, etc.

In particular embodiments of the invention, one of the functional groups, for example the first functional group, is a carboxyl-containing group, in particular a carboxyl (or carboxylate) group or carboxyalkyl group, preferably of the type containing a C1-C6 alkyl, for example methyl or ethyl. Such a feature is highly advantageous in the context of the more global preparation of multi-functionalized nanofibrillated cellulose. The first reactant can then be a haloformic acid, such as chloroformic acid, or an haloacetic acid, such as monochloroacetic acid, or an halopropionic acid, such as chloropropionic acid, or more generally an alkyl-haloacetic acid, such as an alkyl-chloroacetic acid. The first functionalization step can then be qualified as a carboxylation step or a carboxyalkylation step, for example a carboxymethylation step when a carboxymethyl group is grafted on the cellulose polymer.

In particular embodiments of the invention, at least one of the first functional group and the second functional group is of the hydrophobic type. The multi-functionalized cellulose obtained by the method of the invention is then advantageously compatible with matrices based on hydrophobic polymers. Hydrophobic groups that can be used in the context of the invention are for example alkyl, allyl or alkyne chains, aromatic rings, or polymerization initiators, such as benzophenone that enables the polymerization of acrylates or styrene on the surface of the cellulose fibers.

As an example, the second functional group can then be a dye.

Examples of functional groups which can be grafted on the cellulose by the method of the invention are :

- benzophenone derivatives, such as (4-methylphenyl)(4-(prop-2-yn-1-yloxy)phenyl)methanone, which can be grafted onto the cellulose polymer by reacting it with (4-(bromomethyl)phenyl)(4-(prop-2-yn-1-yloxy)phenyl)methanone) in alkaline conditions;
- allyl, which can be grafted onto the cellulose polymer by reacting it with allyl chloride or bromide in alkaline conditions;
- alkyl acetates, wherein the alkyl group preferably comprises from 1 to 20, in particular from 1 to 12, carbon atoms, for example ethyl acetate or octyl acetate, which can be grafted onto the cellulose polymer by reacting it with ethyl chloroacetate or ethyl bromoacetate, respectively octyl chloroacetate or octyl bromoacetate, in alkaline conditions;
- alkyl chains, preferably C1-C20, in particular C1-C12, alkyl chains, for example decane, which can be grafted onto the cellulose polymer by reacting it with 1,10-dibromodecane in alkaline conditions.

The method according to the invention may further respond to one or more of the features described below, implemented individually or in each of their technically operating combinations.

The first functionalization step and the second functionalization step of the method of the invention both preferably consist of Williamson etherification reactions, involving hydroxyl groups of the cellulose polymer. The functionalization steps are carried out by contacting the cellulose with the reactants in the alkaline reaction medium, in conditions enabling the etherification reaction of hydroxyl groups of the cellulose polymer to occur. The cellulose fibers used in the method of the invention are preferably wood-derived fibers. They can be obtained by disintegrating delignified wood pulp, for example by stirring a dispersion thereof in water.

In preferred embodiments of the invention, the method comprises a step of dispersing the cellulose fibers in water before subjecting them to the first functionalization step and the second functionalization step. It is then preferably devoid of any intermediate solvent exchange step between this dispersing step and the first functionalization step and second functionalization step. It has in particular been noticed by the inventors that such an intermediate solvent-exchange step, from water to ethanol then from ethanol to isopropanol, which is typically performed in the methods of carboxymethylating cellulose fibers of the prior art, such as the method disclosed in the above-mentioned publication of Kaldéus et al., is not necessary to achieve successful carboxymethylation, or more generally functionalization, of the cellulose polymer in the framework of the method of the invention. Avoiding such a step in the context of the invention advantageously reduces the production cost of the multi-functionalized cellulose and limits the volume of organic effluents generated thereby.

In preferred embodiments of the invention, after dispersing the cellulose fibers in water, the method comprises separating them from the water, preferably by filtration, before proceeding to the next step of the method.

The method of the invention can then optionally comprise a step of spacing apart the cellulose fibers, which can be carried out by any technique known to the person skilled in the art.

The method of the invention can be implemented to prepare bi-functionalized cellulose, using two reactants each of which comprises a functional group to be grafted on the cellulose polymer. It can also use more of such reactants, for example three of such reactants, each containing a different functional group, in order to prepare cellulose fibers having three functionalities, or even more, still in a one-pot manner.

In particular embodiments of the invention, the method comprises at least one further functionalization step for grafting at least one further organic functional group, i.e., a functional group different from the first functional group and the second functional group, on the cellulose polymer, by reacting the cellulose with at least one further reactant comprising a halogen atom and said further functional group, and devoid of hydroxyl function, the further functionalization step(s) being carried out concomitantly with the first functionalization step and the second functionalization step, in one-pot, in the alkaline reaction medium, in suitable conditions to covalently attach the further functional group(s) to the cellulose polymer.

In particular embodiments of the invention, the first reactant, the second reactant and the further reactant(s) do not simultaneously comprise a carboxyl function and a primary or secondary amine function, or, more generally, functions that are likely to react together in the operating conditions.

The further functional group(s), the further reactant(s), and the further functionalization step(s) in general, can have one or more of the features described above or below regarding, respectively, the first and second functional groups, the first and second reactants and the first and second functionalization steps of the method of the invention.

In particular embodiments of the invention, each of the first reactant and the second reactant, and, when appropriate, the further reactant(s), is present in the reaction medium in an amount of between 0.015 and 10 mmol per gram of cellulose, preferably of between 0.03 and 2 mmol of reactant per gram of cellulose and more preferably of between 0.03 and 1 mmol of reactant per gram of cellulose. In such a concentration range, simultaneous grafting of all the functional groups onto the cellulose polymer is successfully achieved.

The method of the invention can comprise first dispersing the cellulose fibers in the alkaline medium, so as to induce their swelling, then adding therein the reactants for the functionalization steps. Multi-functionalized cellulose in a solubilized state is then obtained, which can be used in many applications such as in the food or in the cosmetics fields, etc.

For obtaining multi-functionalized cellulose fibers, i.e., cellulose in the solid state, such a prior dispersion of the cellulose fibers in the alkaline reaction medium is to be avoided. In such embodiments, the method of the invention then preferably comprises, before the first functionalization step and second functionalization step, and, when appropriate, the further functionalization step(s), steps of impregnating the cellulose fibers, preferably successively, with, respectively, a first impregnating solution comprising the first reactant, a second impregnating solution comprising the second reactant, and, when appropriate, one or several further impregnating solution(s) each comprising a further reactant. Each of these impregnating steps is then preferably carried out for a period of between 10 minutes and 1 hour, preferably between 10 and 40 minutes, more preferably between 20 and 40 minutes, for example of about 30 minutes, and preferentially at room temperature.

The volume of each impregnating solution is preferably of between 5 and 50 ml per gram of cellulose. In these solutions, the reactant may be contained in any suitable solvent thereof, in the concentration required to achieve a rate of between 0.015 and 10 mmol of reactant per gram of cellulose, preferably of between 0.03 and 2 mmol of reactant per gram of cellulose and more preferably of between 0.03 and 1 mmol of reactant per gram of cellulose.

Therefore, in particular embodiments of the invention, the method comprises, before the functionalization steps, a step of impregnating the cellulose fibers with a first impregnating solution comprising the first reactant, then a step of impregnating the cellulose fibers with a second impregnating solution comprising the second reactant, and then, optionally, one or more further steps of impregnating the cellulose fibers with further impregnating solution(s) each comprising a further reactant.

Each of the impregnating steps is preferably carried out by wetting the cellulose fibers with the impregnating solution.

The first functionalization step, the second functionalization step, and, when appropriate, the further functionalization step(s), of the method of the invention are then conducted simultaneously, in the same reaction medium,

according to any conventional operating protocol. The etherification reactions are preferentially triggered by contacting the cellulose fibers with the reactants in the presence of an alkali such as sodium hydroxide, preferably at a rate of between 4 and 40 mmol of sodium hydroxide per gram of cellulose. In preferred embodiments of the invention, wherein the cellulose fibers have previously been impregnated with the reactants, the fibers are then introduced in a reaction medium containing an alkaline compound, such as sodium hydroxide, dissolved in a suitable vehicle, together with the possible remainder of the impregnating solutions which would not have impregnated the fibers during the impregnating steps of the method.

In particular embodiments of the invention, the reaction medium for the functionalization steps is in an alcoholic medium, preferably a mild alcoholic medium, such as containing, or consisting of, isopropanol or a mixture of isopropanol and methanol. Preferably, the reaction medium is devoid of methanol.

The first functionalization step and the second functionalization step, and, when appropriate, the further functionalization step(s), are preferentially carried out for a period of between 30 and 90 minutes, more preferably of between 50 and 70 minutes, for example of about 60 minutes. Such a short reaction time is advantageously sufficient to ensure a high degree of functionalization of the cellulose polymer by all the functional groups.

In preferred embodiments of the invention, the first functionalization step and the second functionalization step, and, when appropriate, the further functionalization step(s), are carried out at a temperature of between 65 and 82 °C. They are preferentially carried out at a temperature of between 65 and 75 °C, thereby reducing even more the energy requirement of the method.

As indicated above, in particular embodiments of the invention, particularly suited for preparing multi-functionalized nanofibrillated cellulose from the multi-functionalized cellulose fibers prepared by the method of the invention, the first functional group is a carboxyl-containing group, in particular a carboxyl group or a carboxyalkyl group, preferably containing a C1-C6 alkyl, for example a carboxymethyl or carboxyethyl group. The first reactant is then preferably an alkyl-haloacetic, preferably a C1-C5 alkyl-haloacetic acid, such as a haloacetic acid, for example monochloroacetic acid, or a halopropionic acid, for example chloropropionic acid. A method according to the invention then comprises subjecting cellulose fibers to concomitant:

- carboxylation / carboxyalkylation, in particular carboxymethylation, step, for grafting a carboxyl-containing group, in particular a carboxyalkyl functional group, for example a carboxymethyl group, on the cellulose polymer, for example by reacting the cellulose fibers with an alkyl-haloacetic acid, in particular a haloacetic acid such as monochloroacetic acid,
- and second functionalization step for grafting on the cellulose polymer the second functional organic group, i.e., a functional group other than the carboxyl-containing group, in particular carboxyalkyl group, of the carboxylation / carboxyalkylation step, by reacting the cellulose fibers with the second reactant comprising a halogen atom and the second functional group and being devoid of hydroxyl function, and optionally also devoid of primary amine function and of secondary amine function,
- and, optionally, further functionalization step(s) for grafting on the cellulose polymer further functional organic group(s), i.e., a functional group other than the carboxyl-containing group, in particular carboxyalkyl group, of the carboxylation / carboxyalkylation step, and other than the second functional group, by reacting the cellulose fibers with further reactant(s) comprising a halogen atom and further functional group(s) and being devoid of hydroxyl function, and optionally also devoid of primary amine function and of secondary amine function,

in one-pot, in an alkaline reaction medium, under suitable conditions for covalently grafting the carboxyl-containing group, in particular the carboxyalkyl group, the second functional group and, when appropriate, further functional group(s), onto the cellulose polymer.

The carboxylation / carboxyalkylation, in particular carboxymethylation, step and the second functionalization step, and optionally further functionalization step(s), of the method of the invention, carried out concomitantly, advantageously yield, in a single step, multi-functionalized cellulose fibers on the surface of which are grafted both carboxyl-containing groups, in particular carboxyalkyl, for example carboxymethyl, groups and the second functional group. The degree of substitution of the cellulose polymer by carboxyl-containing groups, in particular carboxyalkyl, for example carboxymethyl, groups, which, for example, can be measured by conductimetry, as described in a detailed way herein below, is not significantly different from that obtained when solely applying the carboxylation / carboxyalkylation, in particular carboxymethylation, step to the cellulose fibers. The second functionalization step of the method of the invention advantageously has no impact on the carboxylation / carboxyalkylation, in particular carboxymethylation, of the cellulose fibers, nor on their morphology and colloidal stability.

The method of the invention then advantageously provides a straightforward synthetic route to introduce, on the surface of the cellulose fibers, several functionalities, including negative charges deriving from the carboxyl functions, in particular from the carboxymethyl groups, by one-pot simultaneous reactions. The carboxyalkylation, in particular carboxymethylation, step is preferably carried out by contacting the cellulose fibers with a reactant containing a halogen

atom and a carboxyalkyl group, in particular with monochloroacetic acid, in the alkaline reaction medium, in conditions enabling the etherification reaction of hydroxyl groups of the cellulose polymer to occur. Preferably, a ratio of between 0.1 and 10 mmol of such reactant, in particular monochloroacetic acid, per gram of cellulose is applied.

When the second reactant is used in an amount of between 0.015 and 10 mmol per gram of cellulose, preferably of between 0.03 and 2 mmol and more preferably of between 0.03 and 1 mmol per gram of cellulose, the grafting of the second functional group on the cellulose fibers is successfully achieved without significantly impeding the carboxyalkylation, in particular carboxymethylation, step.

The impregnation of the cellulose fibers with the impregnating solution containing the reactant for the carboxylation / carboxyalkylation step, in particular monochloroacetic acid, and the impregnation of the cellulose fibers with the second impregnating solution containing the second reactant, are preferably carried out successively, in any order. Preferably, the cellulose fibers are first impregnated with the reactant for the carboxylation / carboxyalkylation step, in particular monochloroacetic acid, before being impregnated with the second reactant for the second functionalization step.

In particular embodiments of the invention, the method comprises, successively:

- dispersing cellulose fibers in water,
- separating the cellulose fibers from the water by filtration,
- wetting the cellulose fibers with a first impregnating solution containing a reactant for a carboxylation / carboxyalkylation step, for example monochloroacetic acid (MCA), in a suitable solvent, for example in an alcoholic solvent, in particular in isopropanol, preferably at a rate of 0.1 to 10 mmol of reactant per gram of cellulose, and preferably at a rate of 5 to 50 ml of the first impregnating solution per gram of cellulose, and allowing the cellulose fibers to be impregnated by the reactant, preferably at room temperature, preferably for 20 to 40 minutes,
- wetting the cellulose fibers with a second impregnating solution containing the second reactant for the second functionalization step in a suitable solvent, preferably at a rate of between 0.015 and 10 mmol, more preferably between 0.03 and 0.1 mmol, of said second reactant per gram of cellulose, and preferably at a rate of 5 to 50 ml of the second impregnating solution per gram of cellulose, and allowing the cellulose fibers to be impregnated by the second reactant, preferably at room temperature, preferably for 20 to 40 minutes,
- immersing the cellulose fibers, when appropriate together with the remainder of the impregnating solutions which have not impregnated them, in a bath of a solution containing an alkali in a suitable medium, for example containing sodium hydroxide in a mild alcoholic medium, preferentially in isopropanol, preferably at a rate of between 4 and 40 mmol of sodium hydroxide per gram of cellulose,
- and allowing the carboxylation / carboxyalkylation, in particular the carboxymethylation, and the second functionalization reactions to take place, preferably under mild stirring, preferably for a period of about 1 hour, and preferentially at a temperature of between 65 and 75 °C, for example of about 70 °C.

Bi-functionalized cellulose fibers containing a carboxyl-containing function and an additional function are thereby obtained, by one-pot simultaneous reactions. As an example, the second functionalization step of the method of the invention can be implemented to introduce simultaneously in the cellulose polymer, in addition to carboxyl-containing, in particular carboxymethyl, groups, an ethyl acetate group, an allyl group, a decane group or a benzophenone derivative, such as (4-methylphenyl)(4-(prop-2-yn-1-yloxy)phenyl)methanone.

In other particular embodiments of the invention, the method comprises, successively:

- dispersing cellulose fibers in water,
- separating the cellulose fibers from the water by filtration,
- wetting the cellulose fibers with a first impregnating solution containing a reactant for a carboxylation / carboxyalkylation step, in particular monochloroacetic acid (MCA), in a suitable solvent, for example in an alcoholic solvent, in particular in isopropanol, preferably at a rate of 0.1 to 20 mmol of such reactant per gram of cellulose, and preferably at a rate of 5 to 50 ml of the first impregnating solution per gram of cellulose, and allowing the cellulose fibers to be impregnated by the reactant, preferably at room temperature, preferably for 20 to 40 minutes,
- wetting the cellulose fibers with a second impregnating solution of the second reactant for the second functionalization step in a suitable solvent, preferably at a rate of between 0.015 and 10 mmol, more preferably of between 0.03 and 1 mmol, and in particular of between 0.03 and 0.1 mmol, of said second reactant per gram of cellulose, and preferably at a rate of 5 to 50 ml of the second impregnating solution per gram of cellulose, and allowing the cellulose fibers to be impregnated by the second reactant, preferably at room temperature, preferably for 20 to 40 minutes,
- wetting the cellulose fibers with a further impregnating solution of a further reactant for a further functionalization step in a suitable solvent, preferably at a rate of between 0.015 and 10 mmol, preferably between 0.03 and 1 mmol and in particular of between 0.03 and 0.1 mmol, of said further reactant per gram of cellulose, and preferably at a rate of 5 to 50 ml of the further impregnating solution per gram of cellulose, and allowing the cellulose fibers to be impregnated by the further reactant, preferably at room temperature, preferably for 20 to 40 minutes,

- immersing the cellulose fibers, when appropriate together with the remainder of the impregnating solutions which have not impregnated them, in a bath of a solution containing an alkali in a suitable medium, for example sodium hydroxide in a mild alcoholic medium, preferentially in isopropanol, preferably at a rate of between 4 and 40 mmol of sodium hydroxide per gram of cellulose,
- and allowing the carboxylation / carboxyalkylation, in particular carboxymethylation, the second functionalization and the further functionalization reactions to take place, preferably under mild stirring, preferably for a period of about 1 hour, and preferentially at a temperature of between 65 and 75 °C, for example of about 70 °C.

Tri-functionalized cellulose fibers, containing a carboxyl-containing function and two additional functions, are thereby obtained, by one-pot simultaneous reactions.

The same process can be applied for the introduction of even more functionalities on the cellulose polymer, simply by adding a step of impregnating the cellulose fibers with an additional further reactant, before their immersion in the alkaline reaction medium.

As an example, the second functionalization step and the further functionalization step of the method of the invention can be implemented to introduce simultaneously an ethyl acetate group and an allyl group in the cellulose polymer, in addition to carboxyl-containing groups, in particular carboxyalkyl groups, for example carboxymethyl groups.

Another aspect of the invention relates to multi-functionalized cellulose, preferably multi-functionalized cellulose fibers, obtainable by a method according to the invention. The functional groups carried by such multi-functionalized cellulose can have any of the features or combination of features described above in relation with the method of the invention.

Examples of such multi-functionalized cellulose / cellulose fibers are functionalized with carboxyalkyl groups, in particular containing a C1-C6 alkyl, for example carboxymethyl or carboxyethyl groups, and with one or several of the following groups:

- benzophenone derivatives, such as (4-methylphenyl)(4-(prop-2-yn-1-yloxy)phenyl)methanone,
- allyl,
- alkyl acetates, wherein the alkyl group preferably comprises from 1 to 20, in particular from 1 to 12, carbon atoms, for example ethyl acetate or octyl acetate,
- alkyl chains, preferably C1-C20, in particular C1-C12, alkyl chains, for example decane.

Examples of such multi-functionalized cellulose / cellulose fibers according to the invention are tri-functionalized cellulose fibers functionalized with carboxyalkyl groups, in particular containing a C1-C6 alky, for example carboxymethyl groups, together with ethyl acetate groups and allyl groups.

The invention also relates to the use of multi-functionalized cellulose / cellulose fibers according to the invention for preparing composite materials which can be useful for many applications, for example in the field of textiles.

The multi-functionalized cellulose fibers according to the invention can also be used to prepare microfibrillated multi-functionalized cellulose and/or multi-functionalized nanofibrillated cellulose.

Another aspect of the invention is a method of preparing multi-functionalized microfibrillated cellulose, comprising subjecting cellulose fibers to a method of preparing multi-functionalized cellulose fibers according to the invention, preferably comprising a carboxylation / carboxyalkylation step as described above, then subjecting the multi-functionalized cellulose fibers thus obtained to a microfibrillation step.

Microfibrillated cellulose is defined in this description as consisting mainly of microsized cellulose fibers with a width typically of between 20 and 50 nm, and a length in the micrometric range. A small amount of nanosized cellulose particles can also be found in microfibrillated cellulose, mixed with these microsized cellulose fibers.

The microfibrillation step can be carried out in any way known to the person skilled in the art, in particular by mild agitation of the multi-functionalized cellulose fibers in an aqueous vehicle, for example at ambient temperature, for example for a period of 12 to 36 hours, in particular of about 24 hours.

Another object of the invention is multi-functionalized microfibrillated cellulose, obtainable by a method of preparing microfibrillated cellulose according to the invention, which is functionalized by two or more different functional groups, which can have any of the features or combination of features described above in relation with the method of preparing multi-functionalized cellulose according to the invention, excluding the combinations of t-butylcarboxamide with any of the following functional groups:

- methacrylate,
- pent-4-ynoate,
- 2-methyl-3-[(prop-2-yn-1-yl)amino]propanoate, of formula:

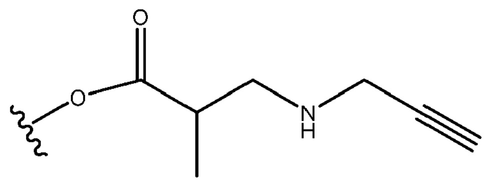

- 3-(1-{2-[2-(2-methoxyethoxy)ethoxy]ethyl}-1H-1 ,2,3-triazol-4-yl)propanoate, of formula:

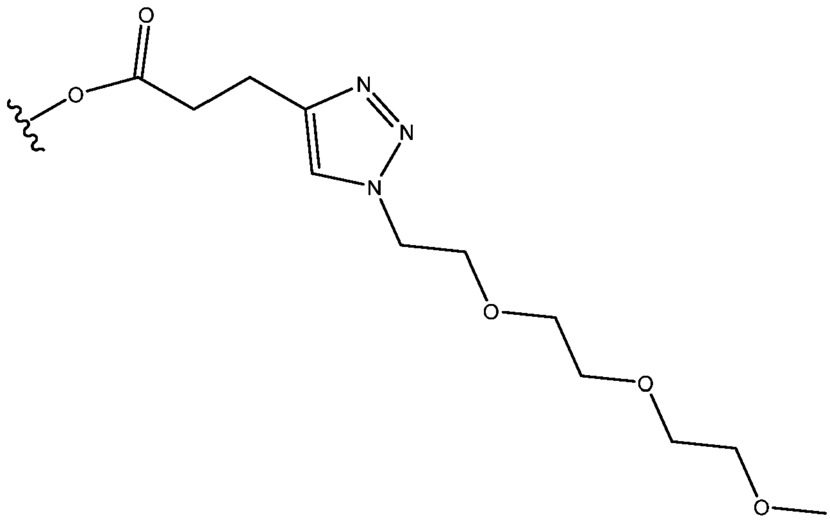

- and 3-(5-fluorescein-1H-1,2,3-triazol-4-yl)propanoate, of formula:

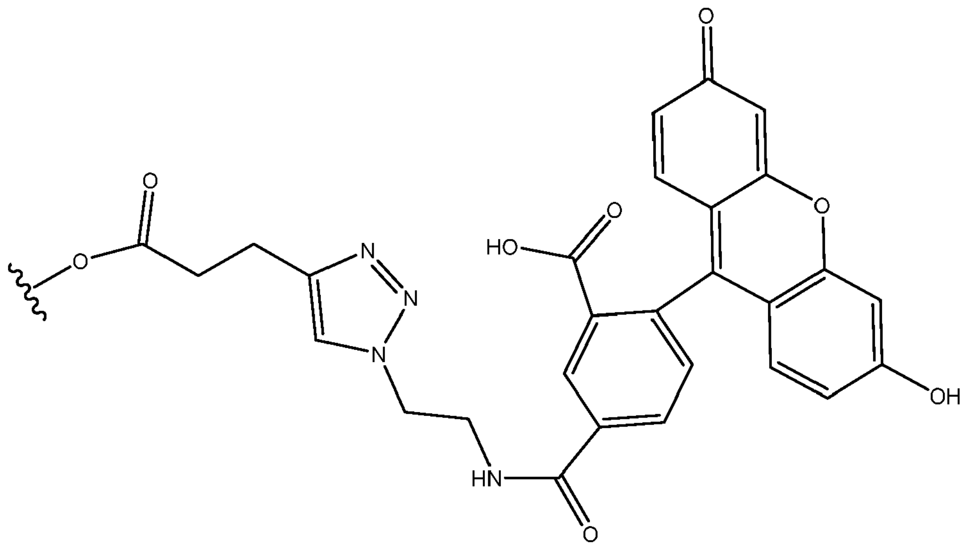

.

Examples of such multi-functionalized microfibrillated cellulose are functionalized with carboxyl-containing groups, in particular carboxyalkyl groups, in particular containing a C1-C6 alkyl, for example carboxymethyl or carboxyethyl groups, and with one or several of the following groups:

- benzophenone derivatives, such as (4-methylphenyl)(4-(prop-2-yn-1-yloxy)phenyl)methanone,
- allyl,
- alkyl acetates, wherein the alkyl group preferably comprises from 1 to 20, in particular from 1 to 12, carbon atoms, for example ethyl acetate or octyl acetate,
- alkyl chains, preferably C1-C20, in particular C1-C12, alkyl chains, for example decane.

Other examples of multi-functionalized microfibrillated cellulose according to the invention are tri-functionalized microfibrillated cellulose functionalized with carboxyl-containing groups, in particular carboxyalkyl groups, for example carboxymethyl, groups, together with ethyl acetate groups and allyl groups. The invention also relates to the use of multi-functionalized microfibrillated cellulose according to the invention for preparing composite materials which can be useful for many applications, for example in the field of textiles.

The multi-functionalized microfibrillated cellulose according to the invention can also be used to prepare multi-functionalized nanofibrillated cellulose.

Another aspect of the invention is a method of preparing multi-functionalized nanofibrillated cellulose, comprising subjecting cellulose fibers to:

- a method of preparing multi-functionalized cellulose according to the invention, wherein one of the first and second functional groups, for example the first functional group, is a carboxyl-containing group, in particular a carboxyalkyl group, preferably containing a C1-C6 alkyl, for example a carboxymethyl group or a carboxyethyl group,

- then a step of nanofibrillation by mechanical treatment of the multi-functionalized cellulose fibers obtained.

The presence on the multi-functionalized cellulose fibers of a high amount of negative charges, deriving from the carboxyl groups grafted on their surface, facilitates fiber disruption to the nanometric scale during the subsequent nanofibrillation step, thereby reducing the energy required for nanofibrillation. Multi-functionalized nanofibrillated cellulose is then obtained without any additional step compared to the methods of the prior art for preparing nanofibrillated cellulose implementing the sole carboxymethylation of the cellulose fibers, with the same degree of nanofibrillation and without any additional energy requirement.

In particular, it has been observed by the inventors that the multi-functionalized cellulose fibers obtained by the concomitant first functionalization step for grafting a carboxyl-containing functional group on the cellulose fibers, in particular a carboxyalkylation step, and more particularly a carboxymethylation step, and second functionalization step of the method of the invention, have particularly good dispersion properties in aqueous vehicles, which can be confirmed by dynamic rheology analysis. After a microfibrillation step, achieved by soft stirring of the fibers in water, dispersions of such multi-functionalized cellulose fibers in water show a gel-like behavior at least in the 0.5 to 4.5 % w/w concentration range. In the 2 to 4.5 % w/w concentration range, these dispersions do not even flow, demonstrating a high dispersion capacity of the cellulose microfibrils in water. Such a high dispersion capacity promotes the subsequent nanofibrillation step of the method of the invention.

The method of preparing multi-functionalized nanofibrillated cellulose of the invention can comprise, after the steps of functionalizing the cellulose fibers, for example the concomitant carboxymethylation step and second functionalization step, and before the nanofibrillation step, a step of purifying the multi-functionalized cellulose fibers, for example by filtration, optionally followed by a step of washing them, for example with isopropanol then with water, until a neutral pH is reached.

It can also optionally comprise, before the nanofibrillation step, a step of disrupting the cellulose fibers to the micrometric scale, i.e., a microfibrillation step. Such a step is particularly easy to carry out, and energy-efficient, due to the high degree of substitution of the fibers by carboxyl groups. It may in particular be carried out by mild agitation of the cellulose fibers in an aqueous vehicle, for example at ambient temperature, for example for a period of 12 to 36 hours, in particular of about 24 hours.

The nanofibrillation step of the method of the invention can be carried out by any conventional technique of mechanical breaking of cellulose fibers to the nanometric scale. It can for example be carried out by homogenization or high-pressure micro-fluidization. For example, the multi-functionalized cellulose fibers can be passed through a piston pump that applies high pressure, and then passed several times by Z-shaped interaction chambers, for example with internal diameters of 400, 200 and 100 $\mu$m, preferably at a constant flow rate, for example of about 350 $mL.min^{-1}$, and for example at pressures of 100, 1500 and 2000 bar, respectively.

In this context of preparing multi-functionalized nanofibrillated cellulose, the second functional group is preferably chosen so as to broaden the field of application of nanofibrillated cellulose to applications requiring specific mechanical properties and/or functionalities, in particular requiring tuning the surface properties of cellulose, such as polarity and/or charge, for example for use in filtration media, for reinforcing composite materials, as emulsions stabilizers in water in oil (w/o) or oil in water (o/w) systems, etc. The second functional group may for example contain a polymerization initiating function, such as of the benzophenone type or of the $\alpha$-bromoisobutyryl type, for forming, on the fibers surface, polymer chains such as acrylates, styrenes, etc., a chromophore, a hydrophobic group, a group bearing a positive or a negative charge, an alkene or an alkyne group for performing click chemistry such as by azide-alkyne cycloaddition, etc. By way of examples, the second functional group can be selected in the group comprising a carbonyl or carboxylate/carboxylic acid function, an alkyl, allyl or alkyne chain, an aromatic ring, a specific functionality such as benzophenone, etc.

In particular embodiments of the invention, the second functional group is of the hydrophobic type. The multi-functionalized nanofibrillated cellulose obtained by the method of the invention is then advantageously compatible with matrices based on hydrophobic polymers. Hydrophobic groups that can be used in the context of the invention are for example alkyl, allyl or alkyne chains, aromatic rings, or polymerization initiators, such as benzophenone that enables the polymerization of acrylates or styrene on the surface of the cellulose fibers. Examples of second functional groups which can be grafted on the cellulose fibers in the second functionalization step of the method of the invention are: benzophenone derivatives, such as (4-methylphenyl)(4-(prop-2-yn-1-yloxy)phenyl)methanone, allyl, alkyl acetates, wherein the alkyl group preferably comprises from 1 to 20, in particular from 1 to 12, carbon atoms, for example ethyl acetate or octyl acetate, alkyl chains, preferably C1-C20, in particular C1-C12, alkyl chains, for example decane.

Another aspect of the invention relates to multi-functionalized nanofibrillated cellulose, more particularly bi-functionalized nanofibrillated cellulose, obtainable by a method according to the invention, which is functionalized by covalent grafting, on the cellulose polymer, of carboxyl-containing groups, in particular carboxyalkyl groups, preferably carboxyalkyl groups containing a C1-C6 alkyl, for example carboxymethyl or carboxyethyl groups, and one additional functional group, preferably devoid of hydroxyl functions, and optionally also devoid of primary and secondary amine functions, excluding an allyl group, a propargyl group, a methyl-triazole-disperse red 13 group and a methyl 3-ethylthiolpropionate group.

In particular embodiments of the invention, this multi-functionalized nanofibrillated cellulose comprises between 0.5 and 0.8 mmol of carboxyl groups, in particular carboxyalkyl groups, preferably carboxyalkyl groups containing a C1-C6 alkyl, for example carboxymethyl or carboxyethyl groups, per gram of cellulose.

The additional functional group may respond to any of the features described above in relation with the second functional group.

It can in particular be selected in the group consisting of benzophenone derivatives, such as (4-methylphenyl)(4-(prop-2-yn-1-yloxy)phenyl)methanone, allyl, alkyl acetates wherein the alkyl group preferably comprises from 1 to 20, in particular from 1 to 12, carbon atoms, for example ethyl acetate or octyl acetate, and alkyls, preferably C1-C20, in particular C1-C12, alkyls, such as decane. Another aspect of the invention relates to multi-functionalized nanofibrillated cellulose, in particular tri, or more, -functionalized nanofibrillated cellulose, obtainable by a method according to the invention, which is functionalized by covalent grafting, on the cellulose polymer, of carboxyl-containing groups, in particular carboxyalkyl groups, preferably carboxyalkyl groups containing a C1-C6 alkyl, for example carboxymethyl or carboxyethyl groups, and at least two additional functional groups, preferably devoid of hydroxyl functions, and optionally also devoid of primary and secondary amine functions.

The additional functional groups may respond to any of the features described above in relation with the second functional group and the further functional group(s).

Tri-functionalized nanofibrillated cellulose according to the invention can for example carry, simultaneously, carboxymethyl groups, ethyl acetate groups and allyl groups.

As indicated above, the multi-functionalized nanofibrillated cellulose of the invention, either bi-functionalized, tri-functionalized, or even more functionalized, can have any functionality(ies) required for a desired application.

It can for example carry a functional group that changes the nature of its interactions with other compounds, i.e., that may be involved in hydrogen bonds, electrostatic interactions, etc., or that changes its polarity from hydrophilic to hydrophobic, in particular so as to favor a better dispersion of the nanofibrillated cellulose in hydrophobic polymer matrices, in the context of the fabrication of composite materials.

Another aspect of the invention relates to the use of multi-functionalized nanofibrillated cellulose according to the invention, in particular bi-functionalized or tri-functionalized nanofibrillated cellulose, for the preparation of composite materials, in particular for the reinforcement of materials based on hydrophobic polymer matrices, one of the functionalities grafted on the cellulose polymer then being a hydrophobic group, such as an alkyl chain, or a polymerization initiator, such as a benzophenone-containing group, the multi-functionalized nanofibrillated cellulose then being treated, before their use, by forming, on the surface thereof, polymer chains such as an acrylate chain.

Multi-functionalized nanofibrillated cellulose according to the invention may also be used for the manufacture of new cellulose-based products intended for many applications, in particular in the following fields, the functionality or functionalities of the nanofibrillated cellulose being appropriately selected according to each specific application:

- in the paper industry, for the manufacture of special papers, for improving the compatibility of the nanofibrillated cellulose with synthetic polymers such as acrylates - a benzophenone functionality, allowing the polymerization of acrylate polymers, having for example been grafted on the cellulose fibers according to the invention;
- in the field of packaging, for modulating the permeability and the gas barrier properties of the materials, as well as improving the compatibility of the nanofibrillated cellulose with other components of the packaging such as paints, hydrophobic surface coatings, etc. - a benzophenone functionality, allowing the polymerization of acrylate polymers, and/or an alkyl chain, modifying the permeability and gas transport properties of the materials, having for example been grafted on the cellulose fibers according to the invention;

- in the manufacture of porous materials, such as membranes, foams, aerogels, wherein the very high specific surface of the nanofibrillated cellulose could allow a control of the nanometric porosity of the materials after drying, giving rise to many applications wherein porosity and high specific surface are key parameters, such as filtration membranes, catalyst supports, thermal insulation materials, etc. - charged groups, such as carboxyalkyls, for example carboxyethyl, capable of tuning the water adsorption and porosity properties of the materials, having for example been grafted on the cellulose fibers according to the invention;
- for stabilizing emulsions: nanofibrillated cellulose functionalized with hydrophobic groups or chelating groups can be used as a stabilizer of hydrophobic phases, for example in paints, varnishes, cosmetic products, or for dispersing functional agents such as opacifying agents, for example titanium dioxide in the paper industry, or reinforcing agents, for example clays - a benzophenone functionality, allowing the polymerization of polymers, and/or an alkyl chain, that modify the amphiphilic properties of the nanofibrillated cellulose, having for example been grafted on the cellulose fibers according to the invention;
- in the field of nanocomposites, taking advantage of the outstanding mechanical properties of nanofibrillated cellulose, the functionalization conferring to it compatibility with other components such as polystyrene, polyurethane, acrylates, etc. - a benzophenone functionality, allowing the polymerization of polymers, and/or an alkyl chain, that favor the interaction with synthetic polymer in composites, having for example been grafted on the cellulose fibers according to the invention;
- in the field of textile: nanofibrillated cellulose can be functionalized with dyes, so that the chemical grafting prevents color losses.

The features and advantages of the invention will emerge more clearly in the light of the following examples of implementation, provided for illustrative purposes only and in no way limitative of the invention, with the support of figures 1 to 7, in which:

- figure 1 shows photographs (top row) and optical microscopy images (bottom row) of cellulose fibers in their native form ("Cell", a1/, b1/), after functionalization with a benzophenone-derived moiety ("Cell-BP", a2/, b2/), after carboxymethylation ("CMC", a3/, b3/) and after simultaneous functionalization with a benzophenone-derived moiety and carboxymethylation according to the invention ("CMC-BP", a4/, b4/);
- figure 2 shows Fourier Transform Infrared spectroscopy (FT-IR) spectra of (4-(bromomethyl)phenyl)(4-(prop-2-yn-1-yloxy)phenyl)methanone ("BP"), cellulose fibers in their native form ("Cell"), cellulose fibers after functionalization with this benzophenone-derived moiety ("Cell-BP"), cellulose fibers after carboxymethylation ("CMC") and cellulose fibers after simultaneous functionalization with this benzophenone-derived moiety and carboxymethylation according to the invention ("CMC-BP");
- figure 3 shows solid-state $^{13}C$ CP/MAS NMR spectra of, from the bottom spectrum to the top spectrum, (4-(bromomethyl)phenyl)(4-(prop-2-yn-1-yloxy)phenyl)methanone ("BP"), cellulose fibers in their native form ("Cell"), cellulose fibers after functionalization with this benzophenone-derived moiety ("Cell-BP"), cellulose fibers after carboxymethylation ("CMC") and cellulose fibers after simultaneous functionalization with this benzophenone-derived moiety and carboxymethylation according to the invention ("CMC-BP");
- figure 4 shows a graph representing the storage modulus G' (solid marks) and the loss modulus *G*" (hollow marks) measured by dynamic rheology, as a function of the frequency, for dispersions of bi-functionalized cellulose fibers obtained by simultaneous functionalization with a benzophenone moiety and carboxymethylation according to the invention, at different concentrations (0.5%, 1%, 2%, 4.5% w/w) in water;
- figure 5 shows a graph representing the loss tangent (tan $\delta = G'/G''$) as a function of the concentration for the dispersions of figure 4;
- figure 6 shows the FT-IR spectra of cellulose fibers obtained by simultaneous functionalization with a benzophenone-derived moiety and carboxymethylation according to the invention, before ("CMC-BP") or after the grafting thereon of polymer chains based on methyl methacrylate, dodecyl methacrylate or styrene monomers;
- and figure 7 shows the FT-IR spectra of tri-functionalized cellulose fibers obtained by simultaneous functionalization with an ethyl acetate group, functionalization with an allyl group and carboxymethylation according to the invention ("CMC-EA-Allyl"), at neutral pH or at pH 2, and of those tri-functionalized cellulose fibers after post-modification with 3-mercaptopropionic acid ("CMC-EA-PA"), at neutral pH or at pH 2.

Materials

Delignified bleached softwood Kraft pulp was used as starting cellulose material. Monochloroacetic acid (MCA), (4-(Bromomethyl)phenyl)(4-(prop-2-yn-1-yloxy)phenyl)methanone, ethyl chloroacetate, allyl bromide, 3-mercaptopropionic acid, 4,4-azobis(4-cyanovaleric acid), methanol, sodium hydroxide, methyl methacrylate, dodecyl methacrylate, styrene and tetrahydrofuran were purchased from Sigma Aldrich and used without further purification. Isopropanol and

diethyl ether were supplied by VWR International.

General protocols for characterizations

Optical microscopy: cellulose samples (0.1 $g.L^{-1}$ in milliQ water) were deposited onto a glass slide, dried at 40°C, and observed by a BX51 polarizing microscope (Olympus France S.A.S.) with a 4x objective. Images were captured by a U-CMAD3 camera displaying a U-TV0.5XC-3 adaptor (Olympus).

Rheology: rheological measurements were performed using stress-controlled rheometer AR-2000 (TA Instruments). Plate geometry (40 mm) was selected. All measurements were performed at 20°C. Samples were covered with paraffin oil to prevent evaporation during measurements. The elastic (G) and viscous (G') moduli were measured within the linear response regime meaning. Measurements were performed twice and the average of values was reported in the graphs.

Infrared analysis (FT-IR, Fourier Transform infrared spectroscopy): infrared spectra were obtained from potassium bromide (KBr) pellets containing freeze-dried cellulose samples placed directly in a Nicolet® iS50 FTIR spectrometer (Thermo Scientific) in absorbance mode. All spectra were collected, with a 4 $cm^{-1}$ resolution, after 200 continuous scans from 400 to 4000 $cm^{-1}$. Conductometry: the surface charge of cellulose was measured by conductometric titration with a 0.01 M NaOH solution by a TIM900 titration manager and a CDM230 conductivity meter equipped with a CDC749 conductivity cell. The degree of substitution (DS) was then calculated by the following equation:

$$DS = \frac{n_{COOH}162}{m_{fibers} - n_{COOH}58}$$

where $n_{COOH}$ is the number of equivalents of -COOH groups calculated from conductometric titration, $m_{fibers}$ is the mass of cellulose pulp (dry basis), 162 accounts for the molecular weight of the anhydroglucose unit of cellulose, and 58 is the net increase in the weight of the anhydroglucose unit of cellulose for each sodium carboxymethyl group substituting a hydrogen atom of a hydroxyl group.

Solid-state $^{13}C$ CP/MAS NMR (Cross-Polarization Magic-Angle-Spinning Nuclear Magnetic Resonance): Cellulose samples (100 mg) were rehydrated in 50 μL $H_2O$ and water excess was absorbed using an adsorbent. About 80-100 mg of each sample was packed into 4 mm NMR rotor. Cross-polarization magic angle (CP/MAS) NMR experiments were acquired on a Bruker Avance III 400 spectrometer operating at a $^{13}C$ frequency of 100.62 MHz equipped with a double resonance H/X CP/MAS 4 mm probe. Measurements were conducted at room temperature with a MAS spinning rate of 9 kHz. The CP pulse sequence parameters were: 3.5 μs proton 90° pulse, 1.75 ms CP contact time at 67.5 kHz. and 9 s recycle time. The number of acquisitions for the CP/MAS $^{13}C$ spectra was typically 5.120 scans. $^{13}C$ NMR spectra were referenced to the carbonyl peak of glycine at 176.03 ppm. All spectra were processed with Gaussian multiplication parameters of LB = -5 Hz and GB = 0.1. NMR spectra were deconvoluted as described in Villares et al., Sci. Rep., 2017, 7, 40262.

Example A - Bi-functionalization of cellulose fibers introducing a benzophenone-derived moiety and a carboxymethyl group

Cellulose fibers were bi-functionalized with a carboxymethyl group and a benzophenone-derived moiety, carrying a benzophenone functional group according to the following reaction scheme:

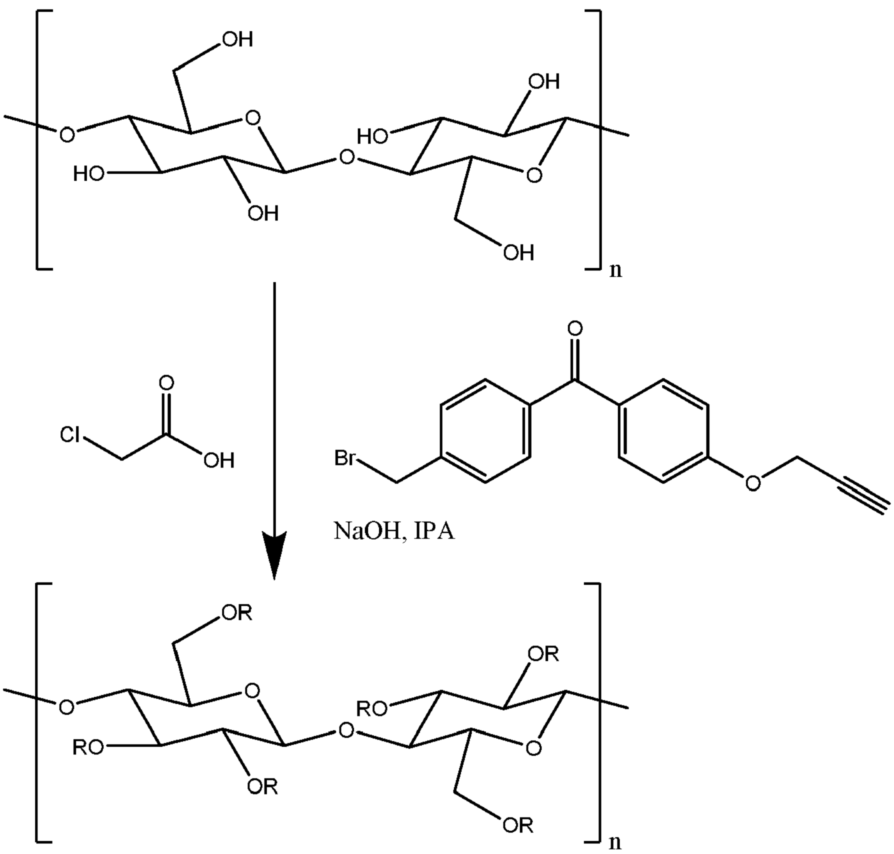


R=H,

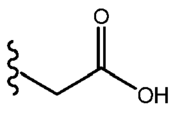 , 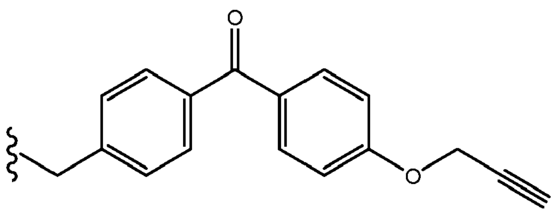

wherein n is an integer between 200 and 5000.

A.1/ Preparation

Cellulose fibers (delignified bleached softwood Kraft pulp) (100 mg) were firstly dispersed in water with a blender. The fibers were filtrated using a vacuum filtration system and washed with ethanol. The fibers were then impregnated with monochloroacetic acid (10 mg) dissolved in 0.5 mL of isopropanol for 30 min at room temperature. Then, (4-(bromomethyl)phenyl)(4-(prop-2-yn-1-yloxy)phenyl)methanone (10 mg) dissolved in diethyl ether (2 mL) was added to the fibers. The fibers were impregnated with this solution for 30 min at room temperature. After impregnation, the fibers were added to a solution of sodium hydroxide (16 mg) in isopropanol (1 mL) heated at 60°C in a two-neck roundbottom flask. 2.5 mL of isopropanol were added to achieve a total isopropanol reaction volume of 5 mL. Reaction was allowed to proceed for 60 min at 70°C under reflux. The fibers were purified by filtration and washing steps were carried out with isopropanol (x3) then water (x3) until reaching neutral pH.

Fibrillation was achieved by magnetic stirring overnight in water, to yield cellulose microfibrils.

For the purpose of comparison, fibers were separately impregnated with monochloroacetic acid or (4-(bromomethyl)phenyl)(4-(prop-2-yn-1-yloxy)phenyl)methanone, to introduce only one functionality (carboxymethyl or benzophenone derivative), and processed as described above.

A.2/ Characterization

The aspect and microscopy images of native cellulose fibers ("Cell", a1/, b1/), benzophenone derivative-functionalized cellulose fibers ("Cell-BP", a2/, b2/), carboxymethylated cellulose fibers ("CMC", a3/, b3/) and benzophenone derivative-functionalized carboxymethylated cellulose fibers ("CMC-BP", a4/, b4/) are shown in figure 1. It can be observed that the introduction of the sole benzophenone derivative moiety ("Cell-BP") did not significantly modify the fiber morphology compared to native fibers ("Cell"). Conversely, visual aspect and microscopy images show a gel-like aspect and fiber disruption for both carboxymethylated samples ("CMC" and "CMC-BP"). The introduction on the cellulose surface of negative charges by the carboxymethyl groups has facilitated the separation between the fibers and the subsequent fibrillation. The FT-IR spectra of native cellulose fibers ("Cell"), benzophenone derivative-functionalized cellulose fibers ("Cell-BP"), carboxymethylated cellulose fibers ("CMC"), benzophenone derivative-functionalized carboxymethylated cellulose fibers ("CMC-BP"), as well as (4-(bromomethyl)phenyl)(4-(prop-2-yn-1-yloxy)phenyl)methanone ("BP"), were acquired. These spectra are shown in figure 2. Except for the "BP" spectrum, they all show the characteristic profile of cellulose fibers. When looking in detail at the 1800-1500 $cm^{-1}$ region, it is evident that new peaks appeared from functionalization. Carboxymethylation is demonstrated by the appearance of a new band at 1736 $cm^{-1}$, corresponding to the C=O stretch from the carboxylic acid group. This band is clearly detected on both CMC and CMC-BP samples. The pure benzophenone derivative presents an intense band at 1640 $cm^{-1}$, ascribed to the ketonic C=O, which is a distinctive band belonging to benzophenone and a band at 1600 $cm^{-1}$. These benzophenone bands are detected on both benzophenone derivative-functionalized samples (Cell-BP and CMC-BP). The 1640 $cm^{-1}$ is not very clear since it overlaps the symmetric deformation vibration of adsorbed water molecules band at 1635 $cm^{-1}$. Nevertheless, the presence of a band at 1600 $cm^{-1}$ in Cell-BP and CMC-BP samples unambiguously demonstrates the successful grafting of the benzophenone derivative moiety. The introduction of the two functionalities in the CMC-BP sample is therefore demonstrated by the presence of bands corresponding to the carboxymethyl and benzophenone groups in the CMC-BP spectrum. Furthermore, the intensity of the carboxyl group is similar for both CMC and CMC-BP samples, which shows that the degree of substitution of the carboxymethylation reaction was not impacted by the simultaneous reaction with the benzophenone derivative.

The carboxymethylated samples CMC and CMC-BP were analyzed by conductometric titration to determine the carboxyl content after carboxymethylation. The total charge of CMC was $0.745 \pm 0.019$ $mmol.g^{-1}$, which corresponds to a degree of substitution (DS) of $0.13 \pm 0.01$. When fibers were simultaneously carboxymethylated and functionalized with the benzophenone derivative (CMC-BP), the total charge was $0.709 \pm 0.037$ $mmol.g^{-1}$, and the corresponding DS was $0.12 \pm 0.01$. No significant decrease in the total charge was therefore observed when both reactions occurred concomitantly, which indicates that both functionalities, carboxymethyl and benzophenone, were successfully grafted.

Solid-state $^{13}C$ CP/MAS NMR experiments were performed to demonstrate the covalent grafting of carboxymethyl and benzophenone derivative functionalities on the cellulose fibers. The spectra obtained are shown in figure 3. The spectrum of unmodified fibers (Cell) displays the characteristics resonances of cellulose between 110 and 55 ppm: C1 at $\delta$ 100-108 ppm, C4 at $\delta$ 79-90 ppm, C2,3,5 at $\delta$ 68-78 ppm and C6 at $\delta$ 58-67 ppm. Carboxymethylated celluloses (CMC and CMC-BP) present the same peaks as well as a peak at 174 ppm ascribed to carboxymethyl groups, demonstrating that carboxymethylation of the cellulose fibers has well occurred.

As indicated above, the presence of charge from carboxymethyl groups on the cellulose fibers impacts their mechanical and viscoelastic properties and confers them a gel-like behavior. Dynamic rheology was used to assess the properties of CMC-BP dispersions in water at different concentrations (0.5%, 1%, 2%, 4.5% w/w) and characterize the gel behavior of these carboxymethylated bi-functionalized cellulose fibers. The results are shown in figure 4. It is observed that, over the entire concentration range of between 0.5 and 4.5 % w/w, G'>G", which is characteristic of a gel-like behavior. The obtained values are in agreement with those observed for microfibrillated cellulose, as described in Paakko et al., Biomacromolecules, 2007, 8, 1934-1941.

The loss tangent (tan $\delta = G'/G''$) was calculated. The results are shown in figure 5. For all concentrations tested, the loss tangent is below 1, which characterizes a gel behavior, and even below 0.3, clearly demonstrating the formation of an entangled network structure.

A.3/ Polymerization assay

Benzophenone is one of the most well-known photoinitiators for radical polymerization. Benzophenone abstracts hydrogen from H-donors such as monomers, and forms two types of radicals: a ketyl radical on the benzophenone moiety and an alkyl radical generated on the H-donor that starts polymerization. Therefore, the benzophenone functionalities grafted at the cellulose surface may act as initiators to graft polymer chains on the cellulose surface. The resultant polymers are therefore tethered by one chain end to the benzophenone moieties at the cellulose surface and can adopt various conformations depending on grafting density.

Three different monomers, methyl methacrylate, dodecyl methacrylate or styrene, were used and polymerization

was achieved by UV irradiation. The bi-functionalized fibers CMC-BP were impregnated with the monomers (20 mmol per gram of cellulose). After irradiation at 365 nm (UV Lightningcure, 4500 $mW.cm^{-2}$) for 30 min, the fibers were washed with tetrahydrofuran to remove the monomer excess.

The growth of hydrophobic uncharged polymer chains on the cellulose fibers was monitored by FT-IR. The spectra obtained for each monomer are shown in figure 6, together with that of the initial bi-functionalized cellulose fibers ("CMC-BP"). Compared to the latter, the spectra obtained after incubation of the fibers with a monomer show the presence of new bands, corresponding to the polymer growth. As the samples were not acidified, the carboxylate ($COO^-$) from the carboxymethyl groups appear at 1600 $cm^{-1}$. For polymethacrylates (methyl and dodecyl), the new band at 1730 $cm^{-1}$ is ascribed to the carbonyl group from the acrylate. Finally, the polymerization of styrene is demonstrated by the presence of bands at 1450, 1490 and 1585 $cm^{-1}$ corresponding to the C-H aromatic stretching.

Conversely, when, as a comparative example, native cellulose fibers were incubated with the monomers, after washing with THF and water, the FT-IR spectra did not show any trace of any of the monomers, which discarded the hypothesis of monomer adsorption on the fiber surface.

Example B - Bi-functionalization introducing an allyl group and a carboxymethyl group

The same protocol as described in Example A was applied using allyl bromide (11 μL dissolved in 0.5 mL isopropanol) instead of the benzophenone derivative as a reactant for the functionalization of the cellulose fibers.

Bi-functionalized cellulose fibers containing carboxymethyl groups and allyl groups were obtained.

They were analyzed by conductometric titration to determine their carboxyl content. The total charge was $0.53 \pm 0.04$ $mmol.g^{-1}$, which corresponds to a degree of substitution (DS) of $0.09 \pm 0.01$.

Example C - Bi-functionalization introducing an ethyl acetate group and a carboxymethyl group

The same protocol as described in Example A was applied using ethyl chloroacetate (11 μL dissolved in 0.5 mL isopropanol) instead of the benzophenone derivative as a reactant for the functionalization of the cellulose fibers.

Bi-functionalized cellulose fibers containing carboxymethyl groups and ethyl acetate groups were obtained.

They were analyzed by conductometric titration to determine their carboxyl content. The total charge was $0.71 \pm 0.09$ $mmol.g^{-1}$, which corresponds to a degree of substitution (DS) of $0.12 \pm 0.02$.

Example D - Bi-functionalization introducing a decane group and a carboxymethyl group

The same protocol as described in Example A was applied using dibromodecane (20 μL dissolved in 0.5 mL isopropanol) instead of the benzophenone derivative as a reactant for the functionalization of the cellulose fibers.

Bi-functionalized cellulose fibers containing carboxymethyl groups and decane groups were obtained.

They were analyzed by conductometric titration to determine their carboxyl content. The total charge was $0.53 \pm 0.04$ $mmol.g^{-1}$, which corresponds to a degree of substitution (DS) of $0.09 \pm 0.01$.

Example E - Tri-functionalization introducing carboxymethyl, ethyl acetate and allyl groups

Cellulose fibers were tri-functionalized with a carboxymethyl group, an ethyl acetate group and an allyl group, according to the following reaction scheme:

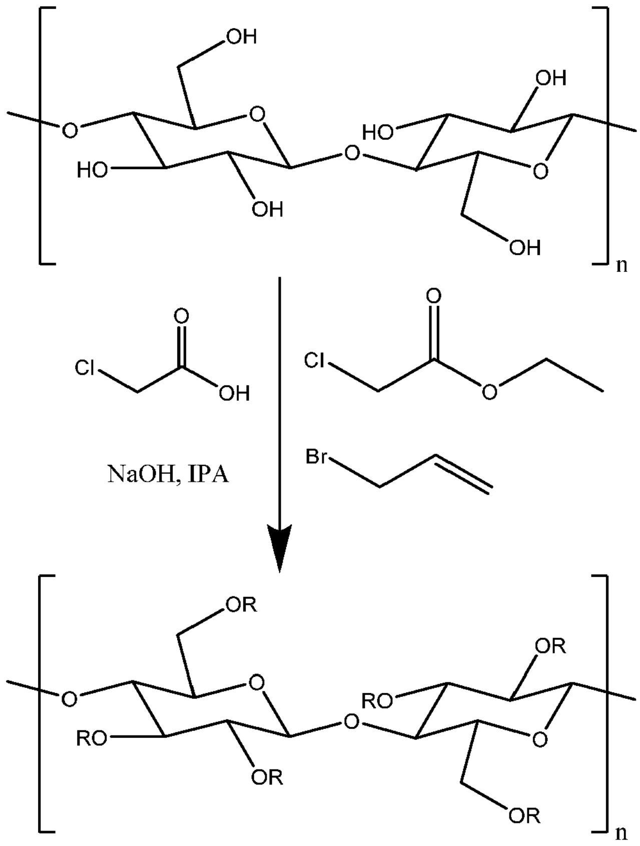


R=H,

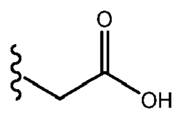
,
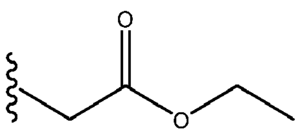
,
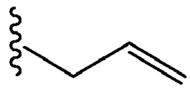

wherein n is an integer between 200 and 5000.

The tri-functionalization proceeded by a similar procedure to the bi-functionalization described above in Example A, but performing three consecutive 30-min impregnations of the cellulose fibers (100 mg) with monochloroacetic acid (10 mg) dissolved in 0.5 mL of isopropanol, then ethyl chloroacetate (11 μL) in 0.5 mL of isopropanol and then allyl bromide (11 μL) in 0.5 mL of isopropanol. Then, the impregnated fibers were added to the sodium hydroxide solution and the same procedure as for bi-functionalization was followed.

The surface charge of the tri-functionalized fibers obtained ("CMC-EA-Allyl"), determined by conductometric titration, was 0.227±0.045 $mmol.g^{-1}$.

These tri-functionalized fibers were analyzed by FT-IR, at neutral pH and at pH 2 (in order to obtain a pH equal to 2, samples were acidified with some 0.01 M HCl droplets). The spectra obtained are shown in figure 7. They confirm the presence of carboxymethyl groups for both samples. At neutral pH, the spectrum ("CMC-EA-Allyl") indeed shows a shoulder at 1600 $cm^{-1}$ corresponding to the $COO^-$groups, which shifts to 1733 $cm^{-1}$ at pH 2 ("CMC-EA-Allyl pH 2") because of the protonation to COOH. At neutral pH, the peak at 1733 $cm^{-1}$ is also detected, indicating the presence of ethyl acetate functionalities on the cellulose surface. The allyl groups are not detected on the FT-IR spectra because the alkene stretch or bending vibrations (1195-1210 $cm^{-1}$, 1410-1442 $cm^{-1}$, 3011-3100 $cm^{-1}$) overlap with the cellulose bands.

In order to detect the presence of the allyl group on the surface of the fibers, a post-modification by thiol-ene coupling with 3-mercaptopropionic acid was carried out. To this end, 100 mg of the tri-functionalized fibers were solvent-exchanged from water (100 mL), ethanol (100 mL, 99%) and then methanol (100 mL). The fibers were then dispersed in methanol (10 mL) and stirred for 60 min. Then, 4 μL of methyl 3-mercaptopropionate and 400 μg of 4,4'-azobis-(4-cyanovaleric acid) were added. The reaction was carried out at 60 ºC for 18 h. The fibers were then washed with methanol.

The increase of surface charge due to the presence of propionic acid groups on the cellulose surface was

quantified by conductometry. The total surface charge measured for the post-modified cellulose fibers was 0.314±0.068 mmol.g-1. The increase in the total surface charge of the propionic acid derivative ("CMC-EA-PA") compared to the allyl derivative ("CMC-EA-Allyl") clearly pointed at the successful coupling between allyl groups and 3-mercaptopropionic acid, and therefore, confirmed the allylation of the cellulose fibers.

FT-IR analysis was conducted on the post-modified fibers, both at neutral pH and at pH 2. The spectra are shown in figure 7, for the fibers at neutral pH ("CMC-EA-PA") and for the fibers at pH 2 ("CMC-EA-PA pH 2"). The FT-IR spectra show an increase in the $COO^-$ band at 1600 $cm^{-1}$ at neutral pH, and the corresponding shift to 1733 $cm^{-1}$ at pH acid (COOH). The increase of the intensity of the band at 1733 $cm^{-1}$, with respect to the band at 1733 $cm^{-1}$ obtained for the non-post-modified sample CMC-EA-Allyl pH 2, can be clearly ascribed to the new propionic acid groups grafted on the allyl functionalities of the cellulose fibers. In order to discard the physical adsorption of 3-mercaptopropionic acid on the cellulose fibers, a control reaction between native cellulose fibers and 3-mercaptopropionic acid was performed. The adsorbed amounts were very low compared to the thiol-ene coupled.

Example F - Nanofibrillation mechanical treatment

The bi-functionalized cellulose fibers obtained in Examples A, B, C and D and the tri-functionalized cellulose fibers obtained in Example E, can be subjected to a nanofibrillation treatment by homogenization.

To this end, the fibers can be passed through a piston pump at high pressure, and then passed several times, at a constant flow rate of 350 $mL.min^{-1}$, by Z-shaped interaction chambers with internal diameters of 400, 200 and 100 μm, at pressures of 100, 1500 and 2000 bar, respectively.

For each sample, multi-functionalized nanofibrillated cellulose is thereby obtained.

## Claims

1. Method of preparing multi-functionalized cellulose, comprising subjecting cellulose fibers to:

   - a first functionalization step for grafting a first organic functional group on the cellulose, by reacting said cellulose with a first reactant comprising a halogen atom and said first functional group, and devoid of hydroxyl function,
   - and a second functionalization step for grafting a second organic functional group on the cellulose, by reacting said cellulose with a second reactant comprising a halogen atom and said second functional group, and devoid of hydroxyl function,

   **characterized in that** said first functionalization step and said second functionalization step are carried out concomitantly in one-pot in an alkaline reaction medium.

2. Method according to claim 1, comprising a step of dispersing said cellulose fibers in water before subjecting them to said first functionalization step and second functionalization step, and being devoid of intermediate solvent exchange step between said dispersing step and said first functionalization step and second functionalization step.

3. Method according to claim 1 or 2, wherein said reaction medium is an alcoholic medium.

4. Method according to any of claims 1 to 3, comprising at least one further functionalization step for grafting at least one further organic functional group on the cellulose, by reacting said cellulose with at least one further reactant comprising a halogen atom and said further functional group, and devoid of hydroxyl function, said further functionalization step being carried out concomitantly with said first functionalization step and said second functionalization step in one-pot in said alkaline reaction medium.

5. Method according to any of claims 1 to 4, comprising steps of impregnating said cellulose fibers with, respectively, a first impregnating solution comprising said first reactant, a second impregnating solution comprising said second reactant, and when appropriate, at least one further impregnating solution comprising said further reactant, each impregnating step being carried out for a period of between 10 minutes and 1 hour, before said first functionalization step and second functionalization step, and, when appropriate, said further functionalization step.

6. Method according to any of claims 1 to 5, wherein each of said first reactant and said second reactant, and, when appropriate, said further reactant, is present in said reaction medium in an amount of between 0.015 and 10 mmol per gram of cellulose.

7. Method according to any of claims 1 to 6, wherein said first functionalization step and second functionalization step, and, when appropriate, said further functionalization step, are carried out for a period of between 30 and 90 minutes.

8. Method according to any of claims 1 to 7, wherein said first functionalization step and second functionalization step, and when appropriate said further functionalization step, are carried out at a temperature of between 65 and 82 °C.

9. Method according to any of claims 1 to 8, wherein said first functional group is a carboxyl-containing group.

10. Method of preparing multi-functionalized nanofibrillated cellulose, comprising subjecting cellulose fibers to:

- a method of preparing multi-functionalized cellulose according to claim 9,
- then a step of nanofibrillation by mechanical treatment.

11. Method of preparing multi-functionalized nanofibrillated cellulose according to claim 10, wherein said step of nanofibrillation is carried out by homogenization or high-pressure micro-fluidization.

12. Multi-functionalized nanofibrillated cellulose obtainable by a method as claimed in claim 10 or 11, **characterized in that** it is functionalized by covalent grafting thereon of a carboxyl-containing group and one additional organic functional group, excluding an allyl group, a propargyl group, a methyl-triazole-disperse red 13 group and a methyl 3-ethylthiolpropionate group.

13. Multi-functionalized nanofibrillated cellulose according to claim 12, comprising between 0.5 and 0.8 mmol of carboxyl groups per gram of cellulose.

14. Multi-functionalized nanofibrillated cellulose obtainable by a method as claimed in claim 10 or 11, **characterized in that** it is functionalized by covalent grafting thereon of a carboxyl-containing group and at least two additional organic functional groups.

15. Use of multi-functionalized nanofibrillated cellulose according to claim 12 or 13 or of multi-functionalized nanofibrillated cellulose according to claim 14, for the preparation of composite materials.

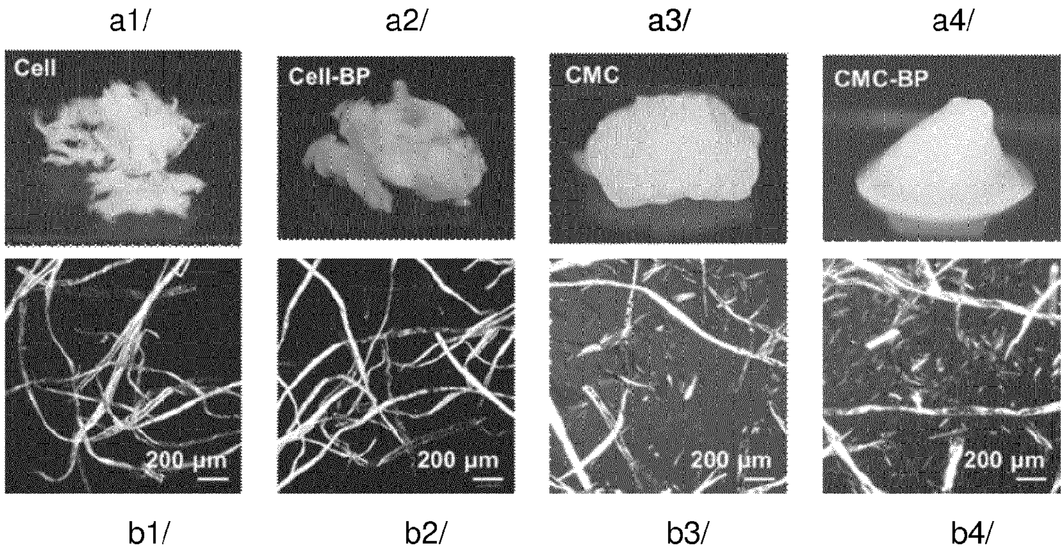
a1/
a2/
a3/
a4/
Cell
Cell-BP
CMC
CMC-BP
200 µm
200 µm
200 µm
200 µm
b1/
b2/
b3/
b4/

FIG 1

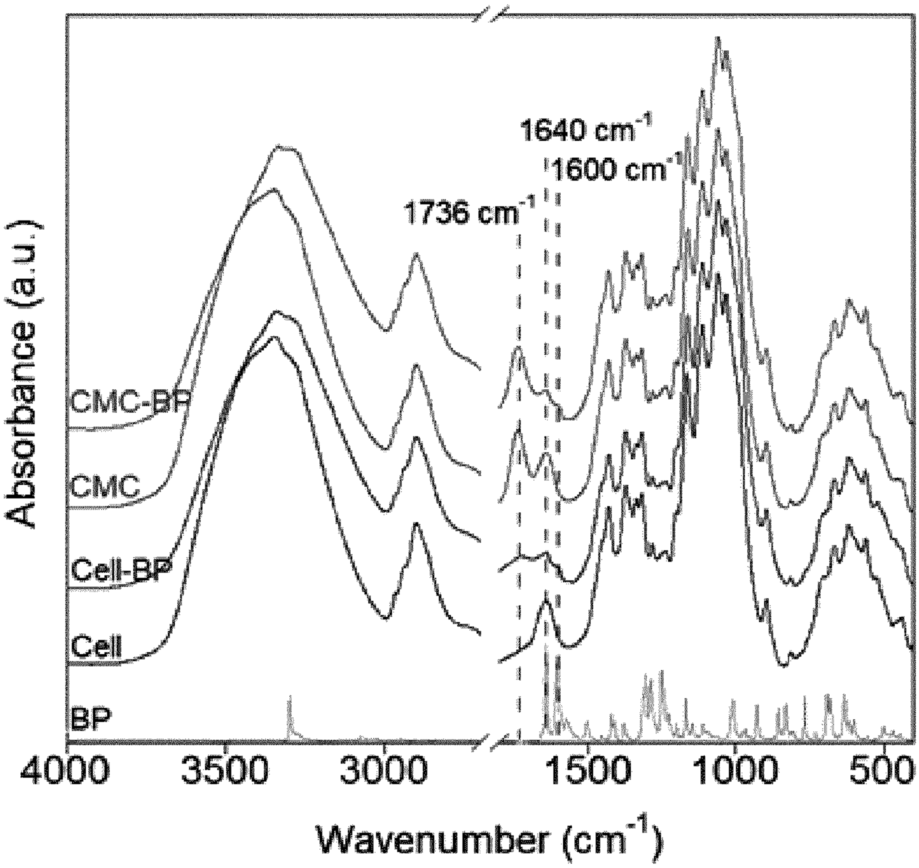
1640 cm-1
1600 cm-1
1736 cm-1
Absorbance (a.u.)
CMC-BP
CMC
Cell-BP
Cell
BP
4000
3500
3000
1500
1000
500
Wavenumber (cm-1)

FIG 2

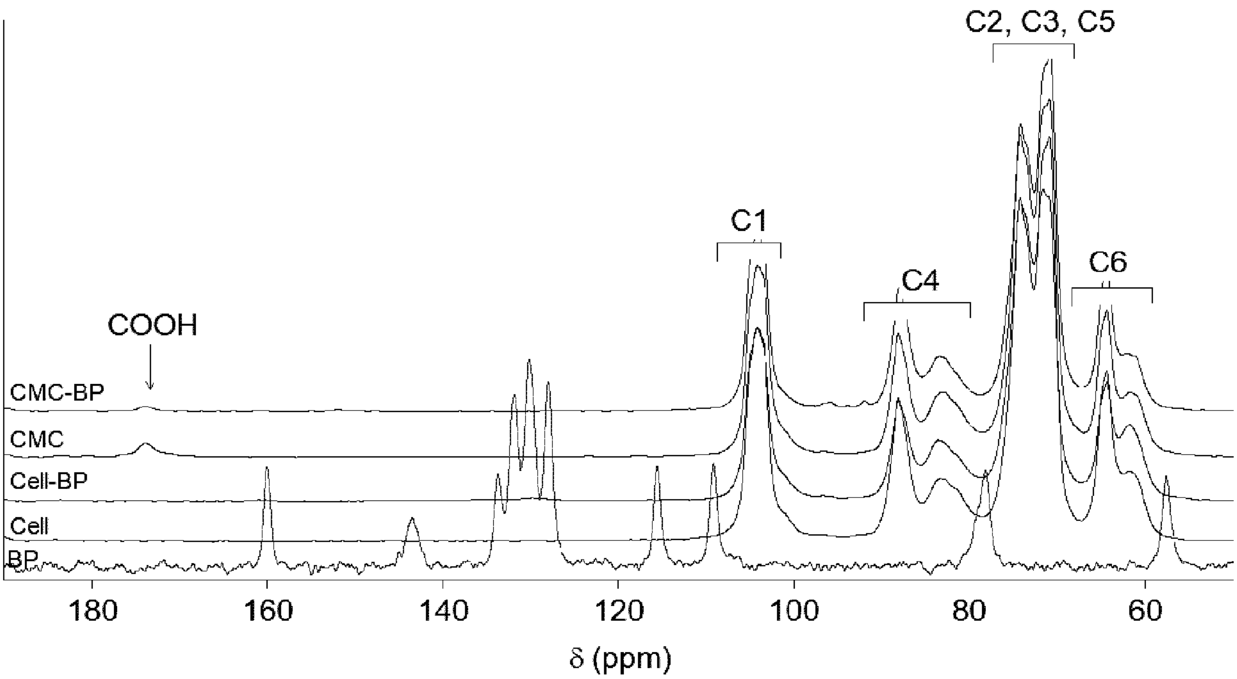
C2, C3, C5
C1
C4
C6
COOH
CMC-BP
CMC
Cell-BP
Cell
BP
180
160
140
120
100
80
60
δ (ppm)

FIG 3

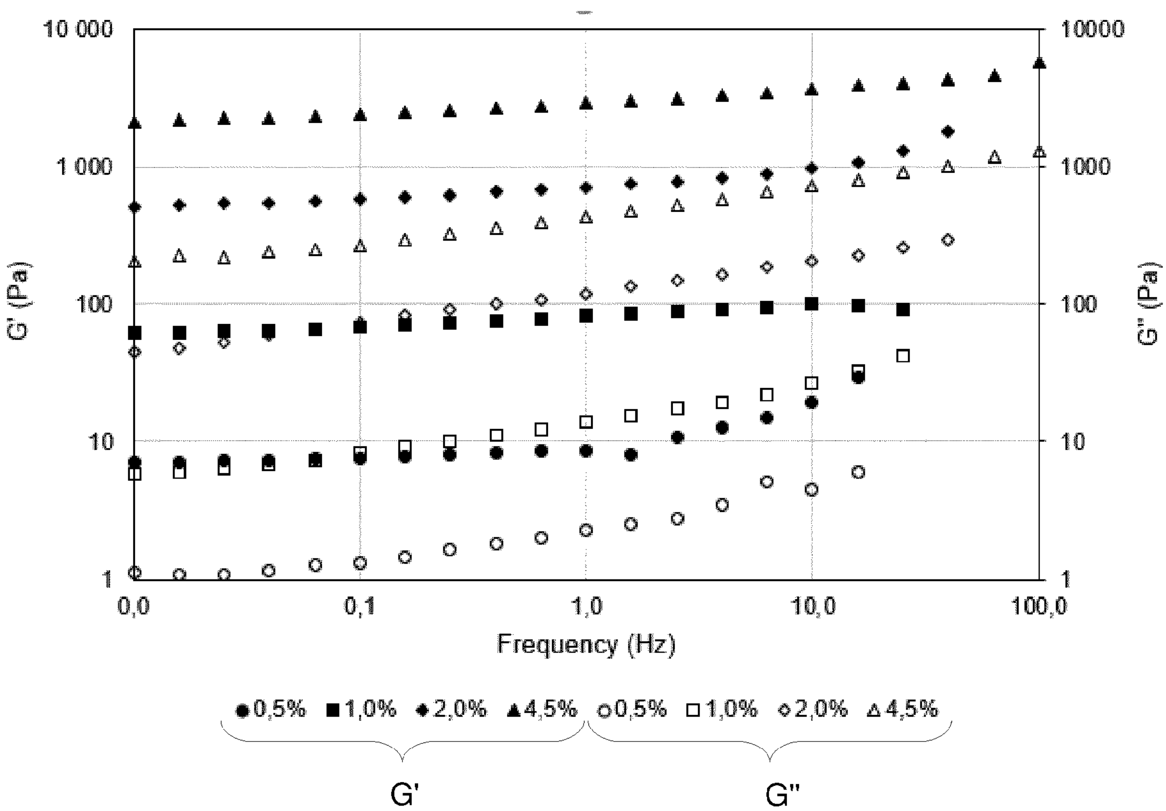
10 000
1 000
100
10
1
10000
1000
100
10
1
G' (Pa)
G'' (Pa)
0,0
0,1
1,0
10,0
100,0
Frequency (Hz)
●0,5% ■1,0% ◆2,0% ▲4,5% ○0,5% □1,0% ◇2,0% △4,5%
G'
G''

FIG 4

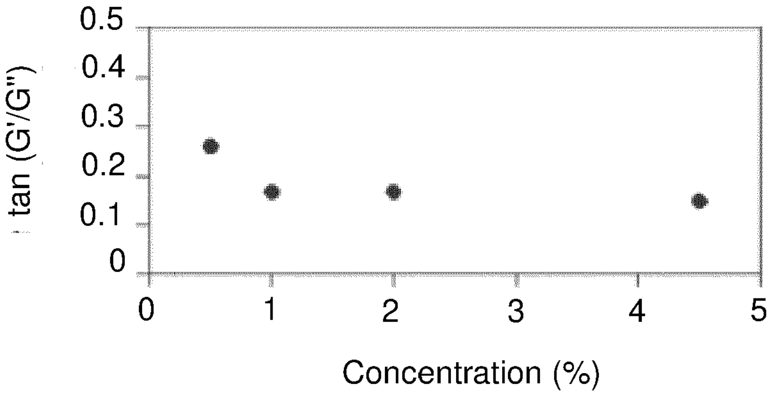
tan (G'/G")
0.5
0.4
0.3
0.2
0.1
0
0
1
2
3
4
5
Concentration (%)

FIG 5

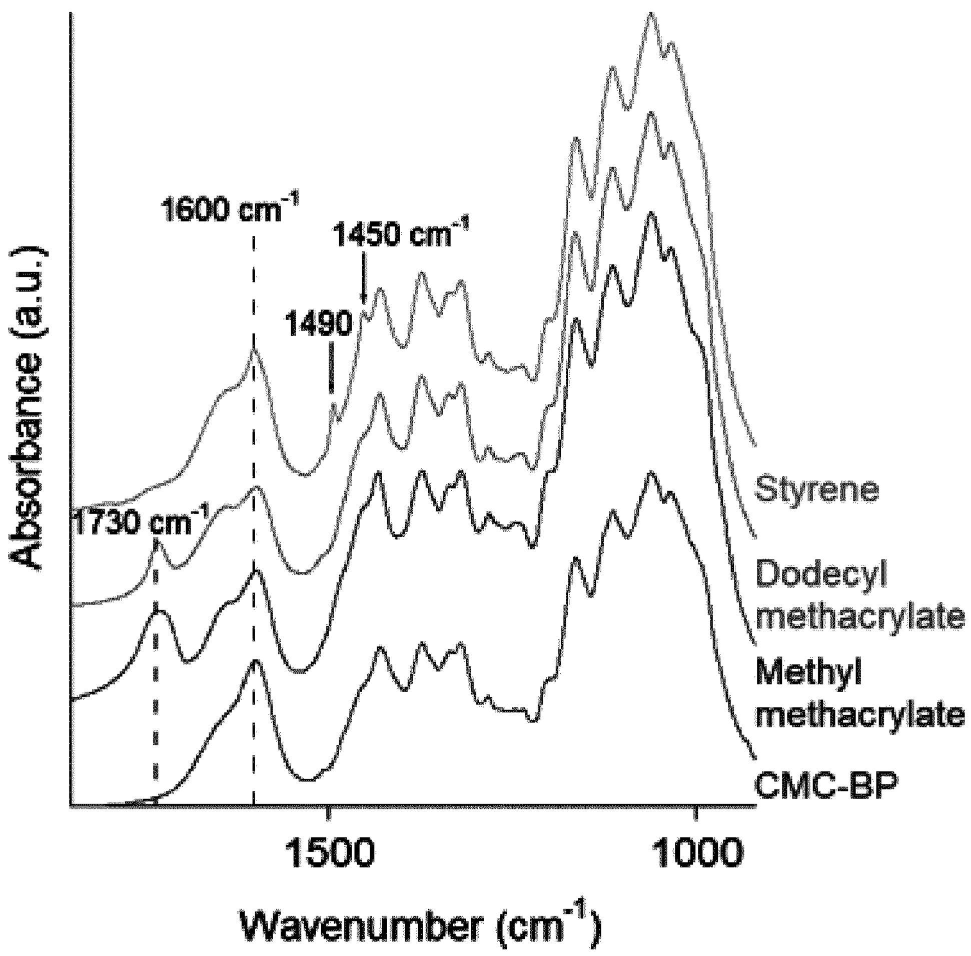
Absorbance (a.u.)
1600 cm-1
1450 cm-1
1490
1730 cm-1
Styrene
Dodecyl methacrylate
Methyl methacrylate
CMC-BP
1500
1000
Wavenumber (cm-1)

FIG 6

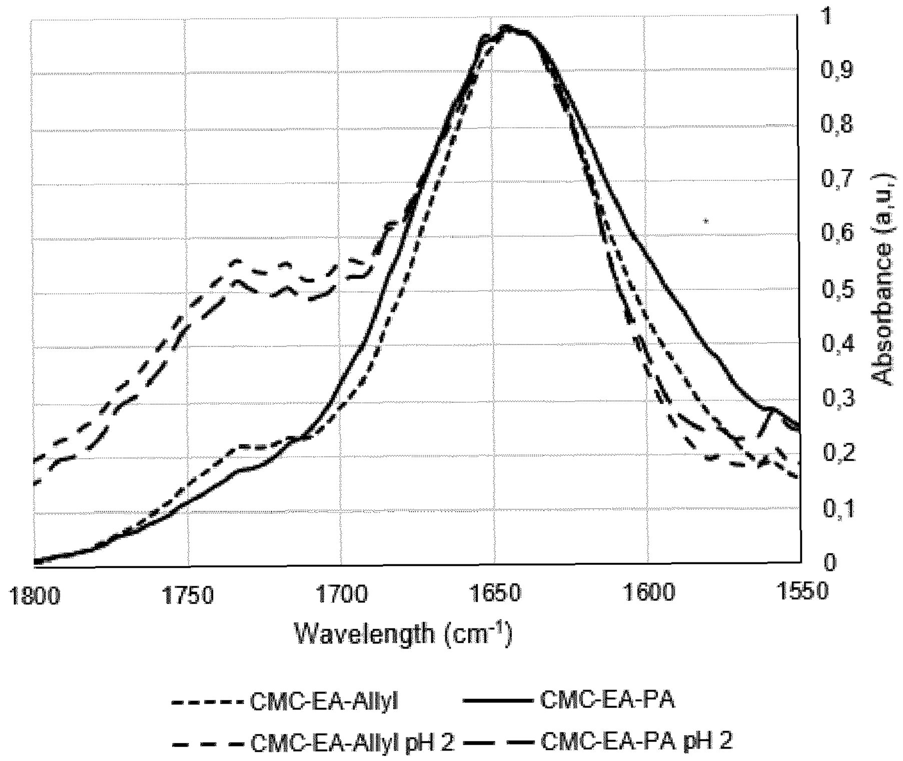
1
0,9
0,8
0,7
0,6
0,5
0,4
0,3
0,2
0,1
0
Absorbance (a.u.)
1800
1750
1700
1650
1600
1550
Wavelength (cm-1)
CMC-EA-Allyl
CMC-EA-PA
CMC-EA-Allyl pH 2
CMC-EA-PA pH 2

FIG 7

Europäisches Patentamt
European Patent Office
Office européen des brevets

# EUROPEAN SEARCH REPORT

Application Number
EP 22 30 5166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br>Y | KALDÉUS TAHANI ET AL: "One-pot preparation of bi-functional cellulose nanofibrils", CELLULOSE, SPRINGER NETHERLANDS, NETHERLANDS, vol. 25, no. 12, 4 October 2018 (2018-10-04), pages 7031-7042, XP036632674, ISSN: 0969-0239, DOI: 10.1007/S10570-018-2066-Y [retrieved on 2018-10-04]<br>* p. 7033, whole page; p. 7035, right column, last paragraph; table 1 * | 1,3-15<br><br>2 | INV.<br>C08B11/193<br>C08B11/20<br>C08B15/08<br>C08L1/26 |
| X<br><br>A | DE 14 18 924 A1 (KALLE AG) 12 December 1968 (1968-12-12)<br>* claims 1,2; example 2 * | 1,3,6,8,9<br><br>12-15 | |
| X<br><br>A | US 6 627 751 B1 (BATELAAN JAN GERARDUS [NL] ET AL) 30 September 2003 (2003-09-30)<br>* column 4, line 59 - line 63; example 6 * | 1,9<br><br>12-15 | TECHNICAL FIELDS SEARCHED (IPC) |
| X | PETTIGNANO ASJA ET AL: "Multifunctionalization of cellulose microfibrils through a cascade pathway entailing the sustainable Passerini multi-component reaction", GREEN CHEMISTRY, vol. 22, no. 20, 1 January 2020 (2020-01-01), pages 7059-7069, XP055937755, GB ISSN: 1463-9262, DOI: 10.1039/D0GC02532A<br>* Schemes 1 and 2, Experimental section * | 12,15 | C08B<br>C09J<br>C08L |

-/--

The present search report has been drawn up for all claims

| Place of search | Date of completion of the search | Examiner |
|---|---|---|
| Munich | 4 July 2022 | Arz, Marius |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 30 5166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | IM WANHEE ET AL: "Optimization of carboxymethylation reaction as a pretreatment for production of cellulose nanofibrils", CELLULOSE, SPRINGER NETHERLANDS, NETHERLANDS, vol. 25, no. 7, 23 May 2018 (2018-05-23), pages 3873-3883, XP036526662, ISSN: 0969-0239, DOI: 10.1007/S10570-018-1853-9 [retrieved on 2018-05-23] * p. 3875, left column, section "Materials"; p. 3876, right column, section "Reaction conditions"; figure 1 * ----- | 2 | |
| A | FENGYUAN HUANG ET AL: "Acylation of cellulose nanocrystals with acids/trifluoroacetic anhydride and properties of films from esters of CNCs", CARBOHYDRATE POLYMERS, vol. 155, 1 January 2017 (2017-01-01), pages 525-534, XP055383997, GB ISSN: 0144-8617, DOI: 10.1016/j.carbpol.2016.09.010 * Section 2.3; page 526 * ----- | 12-15 | TECHNICAL FIELDS SEARCHED (IPC) |

-/--

The present search report has been drawn up for all claims

1

| Place of search | Date of completion of the search | Examiner |
|---|---|---|
| Munich | 4 July 2022 | Arz, Marius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 30 5166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JUN HAI ET AL: "Reversible Response of Luminescent Terbium(III)-Nanocellulose Hydrogels to Anions for Latent Fingerprint Detection and Encryption", ANGEWANDTE CHEMIE, WILEY - V C H VERLAG GMBH & CO. KGAA, DE, vol. 130, no. 23, 8 May 2018 (2018-05-08), pages 6902-6906, XP071375910, ISSN: 0044-8249, DOI: 10.1002/ANGE.201800119 * Scheme 1 * ----- | 12-15 | |

TECHNICAL FIELDS SEARCHED (IPC)

1

The present search report has been drawn up for all claims

| Place of search | Date of completion of the search | Examiner |
|---|---|---|
| Munich | 4 July 2022 | Arz, Marius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 30 5166

This annex lists the patent family members relating to the patent documents cited in the above-mentioned European search report. The members are as contained in the European Patent Office EDP file on
The European Patent Office is in no way liable for these particulars which are merely given for the purpose of information.

04-07-2022

| Patent document cited in search report | Publication date | Patent family member(s) | Publication date |
|---|---|---|---|
| DE 1418924 A1 | 12-12-1968 | NONE | |
| US 6627751 B1 | 30-09-2003 | AT 230419 T | 15-01-2003 |
| | | AU 8338798 A | 30-12-1998 |
| | | BR 9810004 A | 01-08-2000 |
| | | CA 2294034 A1 | 17-12-1998 |
| | | DE 69810472 T2 | 02-10-2003 |
| | | EP 0991668 A1 | 12-04-2000 |
| | | IL 133476 A | 18-12-2005 |
| | | NO 319970 B1 | 03-10-2005 |
| | | PT 991668 E | 30-04-2003 |
| | | RU 2191194 C2 | 20-10-2002 |
| | | TR 199903067 T2 | 21-03-2000 |
| | | US 6627751 B1 | 30-09-2003 |
| | | WO 9856825 A1 | 17-12-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SICHINGA et al.** *Cellulose,* 2022, vol. 29 (2), 1-17
- **KALDÉUS et al.** *Cellulose,* 2018, vol. 25, 7031-7042
- **VILLARES et al.** *Sci. Rep.,* 2017, vol. 7, 40262
- **PAAKKO et al.** *Biomacromolecules,* 2007, vol. 8, 1934-1941